# EUROPEAN PATENT SPECIFICATION

(11) **EP 3 905 109 B1**
(45) Date of publication and mention of the grant of the patent: **28.01.2026**
(21) Application number: 20172320.2
(22) Date of filing: 30.04.2020
(51) Int. Cl.: G06V 20/17, G06V 20/10, G06V 10/44

(54) **SYSTEM FOR CONTROLLING AGRICULTURAL OPERATIONS BY OPTICAL MEANS**
SYSTEM ZUR STEUERUNG LANDWIRTSCHAFTLICHER OPERATIONEN DURCH OPTISCHE MITTEL
SYSTÈME DE CONTRÔLE DES OPÉRATIONS AGRICOLES PAR DES SUPPORTS OPTIQUES

(43) Date of publication of application: 03.11.2021
(73) Proprietor: Kverneland Group Operations Norway AS, 4353 Klepp Stasjon (NO)
(72) Inventor: HONKANEN, Joel, 4350 Kleppe (NO)
(74) Representative: Mader, Joachim

(56) References cited:
- WO-A1-2016/123201
- US-A1- 2018 174 290

## Description

### 1. Field of the invention

The present invention relates to a system for controlling agricultural operations of a working means acting on an agricultural field. The user of the system can derive valuable information from optical measurements and optimize his or her production.

### 2. Prior art

Reference document US 2018/0068416 A1 discloses a system, wherein video data captured from an aerial vehicle (AV) is compressed into an aerial orthomosaic overview of an area. The orthomosaic may then be processed in combination with sensor values, measured by sensors sparsely deployed in the area, to generate precision maps for the entire area, including areas in which no sensors are deployed.

Further, reference document EP 0 857 325 B1 discloses an unmanned agricultural vehicle, wherein a monitoring system of the vehicle is provided with sensors on both sides of the vehicle close to the front and rear sides and in the center thereof and with the aid of which the distance to the ground can be measured, in that the monitoring system is provided with a computer which, after receiving signals from the sensors, is designed to transmit via the transceiver-installation a signal to a mobile transceiver-installation of a supervisor if the measured depth deviates from a required depth.

Document WO 2016/123201 A1 discloses a system for data-driven precision agriculture through close-range remote sensing with a versatile imaging system. The imaging system can be deployed onboard low-flying unmanned aerial vehicles (UAVs) and/or carried by human scouts. Additionally, this document discloses methods for extracting actionable intelligence from rich datasets acquired by the imaging system, as well as visualization techniques for efficient analysis of the derived data products.

Document US 2018/174290 A1 discloses a location identifying device that includes an image data receiving part that receives data of a photographed image of a field taken from the air, and a location data receiving part that receives data of location, that is measured on the basis of navigation signals from a navigation satellite. The location identifying device also includes a shape data detection part that detects a shape of a predetermined path from the photographed image data.

Although some employments of optical systems in agricultural applications are known, there exists the need for a system that allows an enhanced optical spatial mapping to improve an agricultural operation.

### 3. Summary of the invention

The present invention proposes a system for controlling agricultural operations according to claim 1 and a respective method of controlling agricultural operations according to claim 15.

Particularly, the present invention proposes a system for controlling agricultural operations comprising at least one agricultural working means for working on an agricultural field, at least one first imaging device located at the agricultural working means for acquiring images of an environment of the agricultural working means, wherein the at least one first imaging device is adapted to provide optical data, a position unit for determining the absolute position of the at least one first imaging device, wherein the position unit is adapted to provide position data, a data processing unit comprising a data interpretation unit for interpreting optical data received from the at least one first imaging device in relation to position data received from the position unit, wherein the data interpretation unit is adapted to calculate interpretation data based on the received data, a mapping unit for providing a map of data based on the interpretation data. The data processing unit further comprises a feature detection unit for detecting at least one feature of an image of the at least one first imaging device, a feature location determination unit for locating said detected feature in the map of data, a feature determination unit for determining attributes of said detected feature relevant for agricultural operation of said detected feature.

Thus, an enhanced spatial mapping system for agricultural applications can be provided, wherein respective optical information can be obtained by employment of at least one first optical system and its respective positional data, which aids a user to optimize the agricultural operation. In particular, the position and optical information provided by the at least one first optical device may be combined and this may allow real time operation control, further planning or evaluation of the work performed. A data link may be provided to allow transfer of the respective data, preferably in real time. The combined information may be used for photogrammetry 2D and/or 3D mapping of the surroundings, feature detection, estimation of the work rate, work results, detection of anomalies in the field etc. The map of data map be preferably a graphical map.

An agricultural operation may be for instance a soil working operation or a harvesting operation. The agricultural working means can also be any agricultural tool, like for example a cultivator, a disc harrow, a packer, a roller, a chopper, a seed drill, a disc spreader, a mower, a rake, a tedder, a round bale wrapper, etc. The at least one first imaging device may comprise one or more of a digital camera, an NDVI camera, a LASER device, a LIDAR device, a LEDDAR device, a light sensor, a color sensor and/or any suitable other optical sensing methods. The information from different sensors may be used in combination with imaging data acquired thus allowing complex data acquisition which may enhance the characterization of the area detected. Data storage during working operation may be allowed for any data obtained by the employed sensors. Accordingly, each data sample/image frame may be provided with a synchronized timestamp and position available for post viewing or further processing. It may also be possible to view and playback any data from a work session, which may include sensor data, optical images such as for instance raw footage and data relating to detected or labelled features, which may be used for further post processing work. This may be performed by transferring the data via cloud to a remote location. For example a user may be enabled to click on the map at a certain location of a detected feature such as for instance a stone and it may be possible for the user to get the graph of for instance of a draft force measured by respective sensors at that location at the time window of passing the feature, which can be for instance indicated by a data peak on a graph.

The information from different sensors at and/or for the agricultural implement may be used in combination with imaging data acquired thus allowing complex data acquisition which may enhance the characterization of the area detected. For example, one or more force sensors at the connection between the agricultural working means and agricultural implement for measuring the actual draft forces for the actual agricultural operation can be provided. Alternatively or additionally, force sensors at the agricultural implement could be provided that measure forces by elements of the agricultural implement, for example force sensors at individual plough shares, when working the soil, mowing, spreading seeds, etc.. Other sensors can measure the humidity of the soil, the nutrient content of the soil, soil thickness, soil consistency, etc. A draft force required for drafting or dragging an agricultural implement of the agricultural working means may yield additional information that is useful for the system that cannot easily be obtained from image data. For example, the system may be able to classify a geographic object as soil based on the image data. The drag force required for drafting an agricultural implement of the agricultural working means may allow determining the degree of compaction of the soil.

In the present invention the data of for instance optical sensors as well as other sensors may originate from several independent units, for example tractor, implement, drone, camera, mobile, GPS unit etc. To synchronize time of all measurements, the present invention may encompass means for providing a global and common clock time base which may be used to timestamp all data samples and images. This may require a common global clock or timing unit which may be accordingly provided with the present invention such that it may be ensured that all data (both optical and other sensor data) can be synchronized and placed accurate on a common timeline. Similarly, the position unit may ensure that all optical and other sensor data could be placed on the correct location on the map. Clock unit and position unit may be provided as the same unit or can be provided as separate units.

The potential further sensors may be adapted to acquire a complex map in real time. However, also playback post work operations potentially at a remote location may be allowed. The position unit may further comprise a position determination unit, which may be an integral or separate part of the position unit and which may be a receiver, such as a satellite receiver for exchanging data with a global positioning system and in particular a GPS receiver. This may provide absolute or relative position data of any part of the disclosed system, for instance the agricultural working means and the at least one first imaging device. The position determination unit may also be provided separately from the position unit and adapted to transfer its position data to the position unit in a suitable manner. It is noted that a unit within the context of the present invention should be understood as any kind of suitable hardware and/or software means, which would allow providing the described functionality.

It should be understood that the at least one first imaging device may be attached or mounted to an agricultural working means in a way that allows an adjustment (movement, rotation etc.) with respect to the agricultural working means in any desired direction to acquire an image for instance from different acquisition angles or positions. The at least first one imaging device can be an integrated tractor or implement camera system which may be factory fitted or just a smart phone in a dedicated holder, or a consumer camera on a tripod or a third-party camera mounted to a tractor and/or an implement. The at least one first imaging device may also be arranged in a remote manner to the agricultural working means and thus not attached to the agricultural working means.

The system according to the invention may allow for a correlation of the optical measurements by the imaging device and a combination with corresponding position data to provide exact spatial information of the agricultural field on which the agricultural operation is performed. In particular, it may allow for a spatial representation obtained by images taken from different positions and/or acquisition angles. Thus, a more sophisticated way of providing spatial information can be provided by the system according to the present invention. The interpretation of the combined image data and position data can be used to better identify and localize features of interest in the agricultural field, which may be inspected further, to allow performing agricultural working tasks in an optimized way, for example in the economically best way, wherein for instance a fuel consumption versus time is optimized.

The data interpretation unit may interpret the optical data such that the user is assisted in assessing field conditions, abnormalities of the field, unexpected deviations or other events of interest. Thus, due to the interpretation, the user may not need to interpret the raw optical data of the imaging device by him- of herself, which is cumbersome, difficult or even impossible. Further, the data interpretation unit provides the advantage of combining optical data of one or more first imaging systems, which may acquire images from different positions, different altitudes and/or angles and may even further allow a combination with the position data of the respective first imaging devices to create a combined graphical information, such as in form of a map. This map may be combined with further data, for instance information of a driving means used for the agricultural operation, such as present fuel consumption during a ploughing operation, which may allow for a prediction of the estimated total energy/time needed for the whole field after ploughing just a few passes, etc. In other embodiments the system may predict a distance, a slip, a mechanical work, an efficiency, a power use, fuel consumption, etc. The mapping unit may provide the information as any suitable 2D or 3D map representation or any further suitable representation. That is some sensor data may be suitably presented as a graph timeline, such as for example force measurements. Thus, the mapping unit may provide both respective maps and graphs etc.

Basically, the feature detection unit may allow a detection of anomalies in an agricultural field or any other feature of interest that can be optically determined. The feature determination unit may be set up to identify only certain predefined desired features and/or may be set up identifying any irregularities occurring in the acquired images and/or the map of data. Also, the spatial extension of the respective features may be determined by the optical data obtained. The spatial characterization of a feature may also be performed at the feature location determination unit and/or the feature determination unit. The feature location determination unit may allow to characterize a location of the features considering the position information of the respective imaging device. The feature location determination may provide an absolute positional information or relative positional information of a feature, such as its distance to the agricultural working means. This may allow for a controlling action of the driver in reaction to said information, for instance, if the driver would precisely see whether he hits an upcoming obstacle with the tractor or an attached working implement or not and thus whether he must evade or not.

The feature determination unit may characterize an identified feature by its attributes and thus allows to characterize it in further detail. Said attributes may include color, texture and form information, which may be used alone or in combination to identify any suitable physical, chemical or further attributes of interest that may characterize the feature. For instance, it may be determined whether an identified obstacle in the field is a stone or an animal or it may be determined whether certain agricultural crops are ripe for harvest or not, which would accordingly allow a user to take appropriate action.

Further, the information about the features may be provided to a user in form of acoustic information instead of or in addition to the optical information, which may allow a user to react immediately, for instance to a potential danger. Said reactions, which may include acceleration, slowing down or change in movement direction of the agricultural working means can also be induced in an automatic manner, without any manual user input.

Further, the data processing unit may comprise at least one machine learning unit that calculates the determination of the features, which were optically detected. The machine learning unit may use known machine learning methods. Such machine learning methods may comprise supervised learning, unsupervised learning, reinforcement learning and neural networks/deep learning. Thus, the machine learning unit may use different machine learning tools to comply with different situations. Any of the above steps could also be implemented at a remote location such as by cloud computing.

The system further comprises at least one second imaging device not located at the agricultural working means in addition to or instead of the at least one first imaging device, wherein the at least one second imaging device not located at the agricultural working means is adapted to provide optical data and is adapted to be located above the agricultural field at an altitude for acquiring images of an area below the at least one second imaging device not located at the agricultural working means, and wherein the position unit is adapted to determine the absolute position of the at least one second imaging device.

Any features explained above with regard to the at least one first imagining device, such as for instance control, acquisition or data processing, may correspondingly apply for the at least one second imaging device. Thus, according to the present invention, an improved feature recognition can be provided, wherein the images taken by multiple optical first and second devices improve the feature determination, which may not be obtained with just a single system or a system that does not provide combined optical information. In particular, the use of multiple imaging devices may allow for a precise spatial determination. For instance, a spatial planar extension with respect to the agricultural field and a respective height of a feature, such as a stone or crop to be harvested may be determined to obtain a precise 3D-extension by combining the optical information of the at least one second imaging device, which may acquire top view images of said feature with optical information of the at least one first imaging device, which may be arranged at a lower altitude and may be adapted to acquire side view images of said feature. This may allow for a precise spatial feature extension determination which may not be accurately performed by using just a single imaging device.

The at least one second imaging device may be not attached to the agricultural working means and may be thus arranged in a remote manner, wherein a respective movement, such as a translation or rotation may be allowed by respective means. Control of the at least one first and the at least one second imaging devices such as movement, orientation and image acquisition configuration may be performed manually or in a fully automated manner. Also, the at least one second imaging device may be embodied as a handheld smart phone or other handheld consumer camera or any other suitable image acquisition means known to persons skilled in the art.

Preferably, the data processing unit is adapted to combine the received optical data and the received position data to obtain a combined map of data and further to include the determined features to the map of data to obtain an enhanced combined map of data comprising location and attributes of the determined features.

This may allow for a full graphical representation of the agricultural field including all relevant features that may impact the agricultural operation. Accordingly, not only a 2D or even 3D representation of the agricultural field but also respective determined features may be provided containing relevant information for performing the agricultural operation in an optimized manner. Accordingly, a corresponding digital twin of the agricultural field imaged may be formed. Thus, an agricultural analysis tool may be provided which can be used at remote location to plan and monitor each unique field over time. For example, said tool may be updated each year when ploughing or other agricultural operations on said agricultural field are performed. In the case a drone is employed for the imaging device, this may allow to schedule an extra drone fly over and to collect new data, such as current crop height in between the actual operations. Further, already identified fixed obstacles may not need to be mapped each time as they are already detected and identified and/or localized.

Preferably, the data processing unit comprises at least one machine learning unit and an input means for allowing the user to input confirmation data for at least confirming and rejecting the interpretation of the interpretation data, wherein the at least one machine learning unit of the data processing unit calculates the interpretation of the optical data based on confirmation data input by the user via the input means.

Thus, the user has the possibility to confirm an interpretation of the optical data, if the interpretation is correct or the user can reject the interpretation of the optical data, if the interpretation is incorrect. This user input trains the at least one machine learning unit, such that it improves the reliability of the interpretations. Such user input can for example be done directly when the user uses the agricultural working implement on the field, e.g. during ploughing. Then the user can directly "label" or explain to the system an abnormality of the optical data. However, a user can also provide his input at a later point in time, e.g. when analyzing the measured data after work, at a different site, or even at the site of the manufacturer of the working implement.

Preferably, data processing unit is adapted to be provided on the agricultural working means and the system further comprises a further data processing unit for providing processed data, wherein the second data processing unit is adapted to be provided at a location remote from the agricultural working means.

The data processing unit and the further data processing unit may be in a remote connection, which allows data exchange between said first and second processing units.

Also, it should be understood that any data processing of the system of the present invention may also be implemented by respective cloud computing means and that the respective parts of the system are accordingly equipped with suitable means that allow a respect data exchange, in particular in real time.

Preferably, the at least one first imaging device is adapted to be located at a bottom height, wherein the bottom height is the altitude of the at least one first imaging device to the surface of the agricultural field and allows detecting bottom altitude detectable features and/or wherein the at least one second imaging device is adapted to be located at a selected one of three different altitudes, namely a low altitude, which is higher than the bottom altitude and allows detecting low altitude detectable features, a medium altitude which higher than the low altitude and allows detecting medium altitude detectable features and a high altitude which higher than the medium altitude and allows detecting high altitude detectable features.

Thus, it is allowed to define specific altitudes, wherein certain features are expected to be optimally investigable. Thus, a determination of a plurality of features, which may not be determinable or even identifiable at only one altitude is allowed. The at least one second imaging device may also be adapted to be located in more or less than the above noted three altitudes, such as only one altitude or four or more altitudes.

Bottom altitude detectable features may comprise crop height, color variations for (even single) crop plants and the condition of the agricultural working means, soil and crop root characteristics.

Low altitude detectable features may comprise uniformity of soil work, straightness and uniformity of furrows, uniformity of furrow ends, agricultural working means dimensional settings, drift at slopes, coverage of vegetation, obstacles, wheel tracks, wet or dry patches, patches of vegetation or missing vegetation and animals, vehicles, machines, implements, robots or people in the field. Further low altitude detectable features may include vegetation index, weed patches, height of weeds, crop or grass, insect infestation, broken parts or abnormalities on the machine, maintenance needing, status of wearing parts. The system according to the present invention may also be provided with optical systems using wavelengths different than visible wavelengths, such as for instance infrared wavelengths, which may allow the detection of further features detectable by said respective different wavelengths.

The present system accordingly allows determining features, which may not be determinable by a single system in the prior art. For instance, when ploughing a furrow, the system may allow for analyzing any upcoming issues that may occur in the upcoming furrow. Further, the system may allow to determine whether obstacles such as stones are present upstream of the working operation, for instance at the turning points of a tractor and the respective sizes of said obstacles. Also, the system may allow an optical detection downstream of the working operation, for instance regarding a determination of stone releases, and may for instance allow for an examination of the quality of ploughing by estimation of vegetation after ploughing. Further, the system may allow to track moving objects at close distance such as animals, people, vehicles etc. Further, the system may allow detecting uniformity of an agricultural work, such as furrows or furrow ends and may accordingly allow the detection of any uneven results. Even more it may allow the estimation of the position of the tractor and an attached agricultural implement and if a tractor turns out of the furrow. Even further it may allow the estimation of the speed of the agricultural working means. Even further, it may detect if a drift for instance at slopes is present. Thus, also the yaw angle of a working implement may be adjusted accordingly. Also, the system may allow detecting any anomalies occurring at the working means itself, for instance any misfunctioning, lose or broken parts thereof. Thus, a real time determination of the quality of the agricultural work performed may be established and a user may be supplied by this information, preferably in real time, allowing him or her to take appropriate action. Of course, many other features to be detected may be envisioned by a skilled person, which may help to improve the agricultural operation. Medium altitude detectable features upstream of the agricultural operation may comprise straightness of furrows, wet patches and colour variations of an agriculturally operated field. High altitude detectable features may comprise homogeneity of the worked field, agricultural working means movements also on multiple fields, agricultural work control or color variation in a large area.

Locating the at least one second imaging devices in higher altitudes may allow that certain features, such as a straightness of furrows may be investigated for a larger area.

Even further, a better overview of the detected area may be obtained and certain features, which may not be detectable in a bottom or low altitude, could now be investigated in the medium and/or high altitude. This may also include detecting larger irregularities or color variations in the field that may be based on wet patches or ponds and the detection of old driving patterns. Said information may also be used to inform a user about upcoming obstacles and may allow for a route planning around said obstacles. Even further, the location in a high altitude may allow the detection of multiple agricultural fields at the same time and thus a user may be enabled to control and plan the present agricultural operation for a whole fleet of agricultural means to optimize a rate of work or a progress. Also, the system may allow to be shared between multiple users, such as multiple farmers owning neighboring fields, on which it may be worked in parallel. Herein, zooming in for image detection and/or changing altitudes may be alternately performed, for instance by lowering the altitude, dependent on the need of the respective multiple users. Even further, particularly for high altitude images, the images may be combined with third party data sources, for instance NDVI, moisture data, weather radar images, satellite data etc., which thus allows generation of further synergies regarding an optimization of the agricultural operation. On cloudy days for instance, a drone, which may be employed in the system according to the present invention comprising a respective imaging device and the correct type of sensors, could compensate for any clouds that may interfere with satellite images, thus adding missing data.

Preferably, the at least one second imaging device is adapted to be located based on a request for determining a detected feature in the selected altitude.

The request for determining an identified feature may be a manually induced user request or may be an automatically induced request. Hence, a user may select whether he wishes further information about a certain feature or not. Also, he may select to change altitude to determine a certain feature, which may not be determinable in the present altitude. If a feature is not determinable in the present altitude, the system may automatically change to another altitude, for instance a lower altitude, to further determine the identified feature in greater detail. The altitude may be for instance selected based on the known size of the field to be investigated. Herein, larger fields may be investigated at a higher altitude for obtaining a full-field picture, while smaller fields can get be investigated from a lower altitude.

Preferably, the agricultural working means comprises a driving means for driving the agricultural working means, and/or an agricultural working implement attached to the driving means.

For example, the driving means can be a tractor and the working implement may be a plough, a cultivator, a disc harrow, a packer, a roller, a chopper, a seed drill, a disc spreader, a sprayer, a mower, a rake, a tedder, a round bale wrapper, etc. The position unit and/or the position determination unit may be arranged at any suitable position on the agricultural working means, such as on the driving means or the agricultural working implement connected to the driving means. For the case that a misfunction of the agricultural working means occurs, an emergency system may be implemented, which may allow to report on the position of the respective malfunctioning means that may also be shown on the map. This may facilitate the localization of a malfunctioning means. The agricultural working means may also comprise a robot or autonomous implement.

Preferably, the system further comprises a display device, for displaying the acquired images and/or the enhanced combined map of data to a user, wherein the display device is arranged on the driving means, wherein the user is able to see the display device while driving the driving means; and/or is arranged at a location remote from the driving means.

The display device may be provided as digital screen, which may be arranged on the driving means the user drives during the agricultural operation. The display device may be realized by the screen of a user's mobile phone. Therefore, the user, i.e. a farmer, can for example immediately see the measured data and the interpretation of the optical data when working the field and can associate such interpretation to a certain event or feature of the field and may accordingly react. On the other hand, the measured data and the interpretation of the optical data can also be shown and evaluated at a remote location. This is particularly useful in case of a robotic or autonomous working implement or when the driving means is autonomous and has no driver or user onboard. At a remote location, the user may for instance evaluate the data and interpretation at a later point in time. The display device may allow different visual layers and customized user surfaces for the visualization of the map and other data and interpretation, such as characterizing feature attributes. In this way the user can view the data from different perspectives, helping the user to take a decision or to get further insights. The user may select different predefined filters of different signal processing/mathematical functions to the data, so the user can view the data from different perspectives. Preferably, the user may also be able to input text via the display, for example via a touch-display, and/or to record a digital photo via a camera to further information or explanation regarding an event or feature. Preferably, the input means may be a mobile phone connected to the system via a wired or wireless connection, i.e. WLAN or Bluetooth.

Preferably, the system further comprises an operation input controller for controlling the agricultural working operation, wherein the operation input controller is arranged on the driving means, wherein the user is able to perform inputs while driving the driving means; and/or is arranged at a location remote from the driving means.

The operation input controller may control the agricultural working operation based on a manually induced input or an automatically induced input. The operation input controller may comprise one or more buttons, touchpads, joysticks or the like. Preferably the operation input controller may be combined with the display device in the form of a separate touch-screen or may be realized by a mobile phone. Further the input means may be an acoustic input means that uses a microphone and an appropriate processing means for voice recognition. Thus, the user may input information orally, which is particularly useful when driving the driving means.

A user may for example immediately react on a certain event or feature of the field or soil when working the field. On the other hand, such reaction may be done at a distant location, i.e. at home or at the site of the manufacturer of the working implement.

Preferably, at least one of the following components is comprised in a smartphone: the at least one first imaging device, the at least one second imaging device, the position unit, the data interpretation unit, the mapping unit, the data processing unit, the further data processing unit, the display device, the operation input controller.

This may allow for a cheap and easy to implement solution of the system according to the present invention, wherein separate expensive special means may be omitted. In particular any camera means and/or means for calculating or interpreting data in the system according to the present invention may be implemented by using a smartphone. Further, also other sensor data for instance from smart phone internal sensors could be added to the data set such as for example speed, orientation, altitude etc. depending on the sensors provided in the smart phone in addition to the camera. This may lead to a system according to the present invention where the smart phone is the only sensing device provided. Even further, also position detection of respective parts of the system of the present invention may be realized by a smartphone, such as for instance via GPS.

Preferably, the data processing unit is further adapted to provide a suggested controlling response based on the determined features of the enhanced combined map of data, wherein the suggested controlling response is provided to a user via the display device, and/or automatically induces a controlling response at the agricultural working means, which is accordingly controlled based on the controlling response.

This may allow a user selecting one out of a group of proposed actions on a detected event. For instance, a user may be provided with one or more selectable options regarding an evasion of an obstacle. Said proposal may be predefined and may be chosen based on an algorithm, which may identify the detected feature and accordingly proposes one or more proper reactions. Said algorithm may also be trained, for instance by machine learning that may be trained by the acquired images and/or a respective user input, for instance as a reaction on a detected event. Thus, use of the system may be facilitated as a user may only decide between few items of a group of proper reactions.

Further, a user may also be able to add new images by using a smart phone via a respective GUI or app. This may allow simply taking a photo of a new or missing feature, which may then be added to the overall dataset and/or map and accordingly labelled automatically or by additional user input or a respective description. This may allow a training of the system based on the user inputs, which accordingly improves the system over time. Also, if the machine learning method employed in the present system is uncertain if the detected feature is correctly determined, the user may be presented with a corresponding input option to confirm or reject the proposed determination of said feature. The system may for instance request a user input if a certainty value for a distinct feature is not reached. Then, the user input may aid in reaching a certainty value such that the system stops demanding a user input for said and similar features in the future. This may allow a training of the system over time. The automatic controlling response may base on the outcome of a machine learning results provided with the present system.

Preferably, the at least one second imaging device is arranged on an autonomous aerial vehicle, wherein the operation input controller includes an autonomous aerial vehicle control, which is adapted to exchange data with the data processing unit, wherein the data processing unit is further adapted, after detecting a feature, to submit a suggested altitude value to the autonomous aerial vehicle control based on the detected feature, wherein the autonomous aerial vehicle control is adapted to move the autonomous aerial vehicle to the suggested altitude value automatically or by user input, wherein the data processing unit is adapted, after the autonomous aerial vehicle has been moved to the suggested altitude value, to perform a feature detection, localization and/or determination automatically or by user input.

The autonomous aerial vehicle, for instance a drone, may be provided with respective light emitting means, such as lamps, and when positioned in a low altitude, said lamps may illuminate the work area upstream of the agricultural working means.

The above described system may also comprise a draft force sensor. For example, the measured force may be a draft force of the agricultural working implement or a longitudinal force or momentum measured on a part of the agricultural working implement. Also, further sensors like sensors to acquire tractor and/or implement metrics may be provided in the present system. The sensor data may be linked to time and location data and may be correlated with optical data acquired as also previously described. For receiving and storing any data handled in the system, such as for instance image data from the imaging devices and position data from the position unit and/or characterizing data of attributes of features determined by the processing unit, the system may further comprise a data memory unit that is able to receive and store said data. The data memory unit may be arranged at the driving means, on the agricultural working implement or even be implemented remote in a data cloud. The data processing unit may be arranged at the driving means or on the agricultural working implement. Further, data processing unit and/or data memory unit could be in a remote location where data is sent both ways via telemetry or other mobile data connection. Any potential heavy computation of the system of the system can also be performed at remote location, whereas lighter computation can be done locally for instance at the driving means or agricultural working implement. The system may further comprise at least one acceleration sensor arranged at the working implement, for providing acceleration data of the working implement. Any data transfer connections between respective devices, units or means noted in this specification, can be established in a suitable wired or wireless manner.

The at least one machine learning unit can be automatically set up and trained during use. When several units are provided, they may communicate and exchange data such as raw or labelled data like draft force or optical data with "internal" or "external" machine learning units and be trained for the detection and determination of different objectives such as for instance stones and animals. Thus, as an example a draft force machine learning unit could exchange data with an optical machine learning unit provided in the system and vice versa. Thus, it may improve its force and optical interpretations over time. A trained optical system may be allowed to output its results such as labelled features, for instance a stone, to train a general sensing system for example a force sensing system to interpret sensor readings that correspond to the detected feature at a certain time and location. For example, a stone that is optically identified and labelled as a "stone" could be associated with the force sensor reading at time of passing the stone. This correlation of data can then be used to automatically train how to detect stones from a pure force sensor data set. That is force peaks of certain shape get a label "stone" which can be used for training of a secondary machine learning system for force sensor data. A further benefit may be provided in that other derived agriculture systems that lack optical sensing, but only employ for instance a force sensor could benefit from this training. A trained force detection algorithm may be distributed to these systems and they may accordingly be able to detect pre-trained features just by evaluating the force data stream without having an additional optical system. The at least one machine learning unit may comprise a neural network.

The present invention is preferably further directed to a method of controlling agricultural operations by using a system according to one of the preceding embodiments.

### 4. Short description of the Figures

In the following, a preferred embodiment of the invention is disclosed by means of the figure, in which:

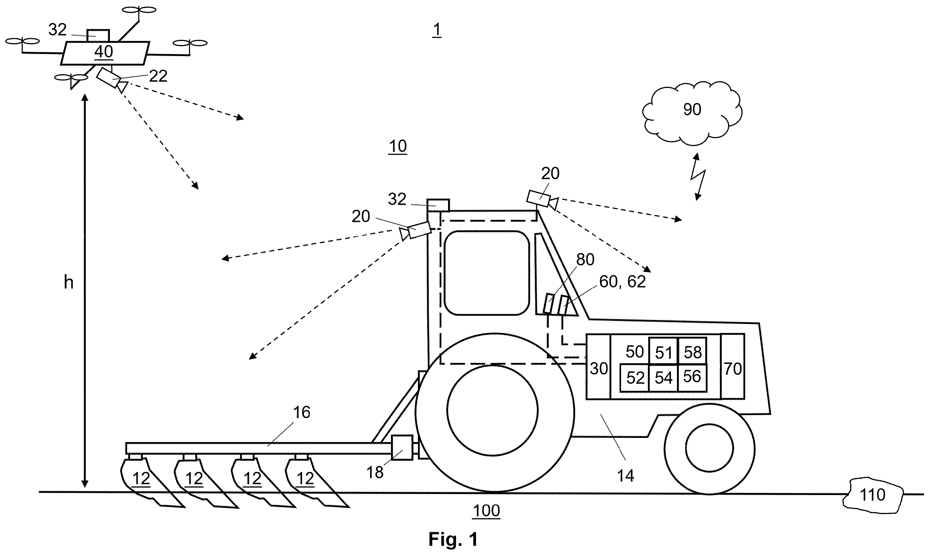

- Fig. 1: shows a schematic view of an exemplary embodiment of the system.

### 5. Description of preferred embodiments

In the following preferred embodiments of the invention are disclosed by means of the figure.

Fig. 1 shows an exemplary embodiment of a system 1 comprising an agricultural working means 10 comprising an agricultural working implement 16, which is depicted in form of a plough with plough shares 12. The agricultural working means 10 further comprises a driving means 14, which is depicted in form of a tractor, wherein the driving means 14 and the agricultural working implement 16 are interconnected. As shown, the driving means 14 is presently ploughing the soil of an agricultural field 100. Although the preferred embodiment is a ploughing operation example, the present invention is not limited to this particular embodiment but is suitable for any agricultural application.

Further, a sensor 18 is provided in form of a draft sensor which measures the draft force of the driving means 14 that is applied to the agricultural working means 10.

The driving means 14 comprises two first imaging devices 20 in form of cameras, which are attached and arranged at the front side and the rear side of the driving means 14. The first imaging devices acquire images from the front and rear environment of the driving means 14. In the embodiment shown, a position unit 30 is provided at the driving means 14, which determines the position of the agricultural working means 10, in particular the positions of the driving means 14 and the agricultural working implement 16. The two first imaging devices 20 are connected to the position unit 30, such that data exchange between the position unit 30 and the first imaging devices 20 is enabled. The position unit can therefore determine the absolute positions of the two first imaging devices 20.

A data processing unit 50 for data processing of captured images and sensed data may be located at the agricultural working means 10. The data processing unit 50 comprises a data interpretation unit 51, a feature detection unit 52, a feature location determination unit 54, a feature determination unit 56 and a machine learning unit 58.

In the embodiment shown, a second imaging device 22 is provided at an autonomous aerial vehicle or drone 40. The autonomous aerial vehicle 40 acquires images from an altitude h above the agricultural field 100. The imaging devices 20 and 22 are able to transfer their images to the data interpretation unit 51 of the data processing unit 50, which is provided at the driving means 14. The data interpretation unit 51 combines the provided image data by the first imaging device 20 and the second imaging device 22 to a combined map. The data interpretation unit 51 also interprets the optical data of the imaging devices 20 and 22 in relation to the position data provided by the position unit 30 and calculates an interpretation of any detected features such as feature 110, which is depicted as a stone 110 that is located in the agricultural field 100. Further, the data interpretation unit 51 considers the measured sensor data of a sensor 18 at or for the agricultural implement and may calculates a 2D or a 3D map of the field. Data transfer between the imaging devices 20, 22 and the data processing unit 50 could be established in any suitable manner, for instance, as shown, in a wired connection as shown for the first imaging devices 20 and in a suitable wireless manner for the second imaging device 22.

In the embodiment shown, a position determination unit 32 is provided at the driving means 14. As depicted, the position determination unit 32 is a GPS receiver for determining of the exact position of the driving means 14, which exchanges data with the position unit 30. Thus, the GPS receiver is able to send and receive satellite position data and exchange this information with the position unit. However, the position determination unit 32 may also be arranged on the driving means 14, the agricultural working implement 10 or autonomous aerial vehicle 40 to determine respective absolute or relative positions of the respective parts of the system 1.

The data processing unit 50 further comprises the feature detection unit 52, which comprises a specific software to allow identifying features in the images and/or the map created by the images, such as feature 110, which is a stone lying in the agricultural field 100. The data processing unit 50 further comprises a feature location determination unit 54, which allows calculating the position of the detected feature. For this, respective images of the first imaging device 20 and the second imaging device 22 are combined considering the positions of the imaging devices 20 and 22 and the spatial dimensions and of the detected features, such as height, width and depth of feature 110.

The data processing unit 50 further comprises the feature determination unit 56, which allows to identify respective attributes of said feature. For instance, in the embodiment shown, the feature determination unit 56 allows by determining the structure and color of feature 110 that said feature is a stone and not an animal of the same spatial dimensions. Since some features can only be determined at a certain altitude or angle of detection, the autonomous aerial vehicle 40 could be directed to a position at a suitable altitude allowing acquisition at an optimal height and/or acquisition angle to properly identify, locate and determine said features. Respective information about the feature, its location and specific attributes can be combined and integrated in the combined map, which is accordingly presented to a user via a display device 60, which is provided at the driving means 14. The display device is located within the driving compartment of the driving means 14 such that a driver can directly see the images acquired by the imaging devices 20 and 22 and/or the combined map including detected features and/or any further derived values, which would allow the driver of the tractor to control the ploughing or adjust the altitude of the autonomous aerial vehicle 40 in order to inspect a respective feature further.

Further, a mapping unit 70 is provided at the driving means 14. The mapping unit receives the data of the data processing unit 50 and creates a map of data combining any image data, position data, and feature data obtained by the other units and devices provided in the system. Said map can be shown via the display device 60 to the driver and shows all relevant data of the present agricultural operation, including positioning of the driving means in the agricultural field, location and characteristics of any features.

For controlling the autonomous aerial vehicle 40 and/or the agricultural working means 10, an operation input controller 80 is provided at the driving means 14, which allows a user to adjust any desired parameter of interest such as for example driving speed of the driving means 14, orientation of the driving means 14 and/or the agricultural working implement 16, plunging depth of the ploughing shares 12, altitude of the autonomous aerial vehicle 40, movement of the imaging devices 20 and 22 etc.

The display device 60, the operation controller 80, the position unit 30, the data processing unit 50, the mapping unit 70 and one of the first imaging devices 20 can be also realized by a smart phone 62 that is attached to the agricultural working means 10. The smart phone 62 may run an application or program that enables integration and data transfer with the other elements of the system 1 and the agricultural working means.

The data processing unit 50 may further comprise cloud based intelligence 90 for real-time processing of data. Such cloud based intelligence 90 may be provided by an external server that is wirelessly connected to the data processing unit 50 via the 4G mobile data standard or WLAN or any other wireless data connection. The cloud based intelligence 90 can be from an external service provider and be located at any arbitrary physical location. The cloud based intelligence 90 can provide a very high computation power, used for example for a real-time 3D photogrammetry of the captured optical data.

Further, the data processing unit 50 preferably comprises a machine learning unit 58 that may calculate a determination of the features 110, which were optically detected. The machine learning unit 58 uses known machine learning methods, like supervised learning, unsupervised learning, reinforcement learning and neural networks/deep learning. Thus, the machine learning unit 58 may use different machine learning tools to comply with different situations. Any of the machine learning operations can also be implemented at a remote location such as by the cloud based intelligence 90.

For a manual training of the machine learning unit 58 the user may input a confirmation or rejection of the automatic feature detection via the operation input controller 80, a touch sensitive display device 60 or the smart phone 62.

### 6. List of reference signs

- 1: system
- 10: agricultural working means
- 12: plough shares
- 14: driving means
- 16: agricultural working implement
- 18: sensor
- 20: first imaging device
- 22: second imaging device
- 30: position unit
- 32: position determination unit
- 40: autonomous aerial vehicle
- 50: data processing unit
- 51: data interpretation unit
- 52: feature detection unit
- 54: feature location determination unit
- 56: feature determination unit
- 58: machine learning unit
- 60: display device
- 62: smart phone
- 70: mapping unit
- 90: cloud based intelligence
- 80: operation input controller
- 100: agricultural field
- 110: feature
- h: altitude

## Claims

1. A system (1) for controlling agricultural operations comprising:
at least one agricultural working means (10) for working on an agricultural field (100);
at least one first imaging device (20) located at the agricultural working means (10) for acquiring images of an environment of the agricultural working means (10), wherein the at least one first imaging device (20) is adapted to provide optical data;
a position unit (30) for determining the absolute position of the at least one first imaging device (20), wherein the position unit (30) is adapted to provide position data;
a data processing unit (50) comprising a data interpretation unit (51) for interpreting optical data received from the at least one first imaging device (20) in relation to position data received from the position unit (30), wherein the data interpretation unit (51) is adapted to calculate interpretation data based on the received data;
a mapping unit (70) for providing a map of data based on the interpretation data, and
at least one second imaging device (22) not located at the agricultural working means (10) in addition to the at least one first imaging device (20), wherein the at least one second imaging device (22) not located at the agricultural working means (10) is adapted to provide optical data and is adapted to be located above the agricultural field (100) at an altitude (h) for acquiring images of an area below the at least one second imaging device (22) not located at the agricultural working means (10), and wherein the position unit (30) is adapted to determine the absolute position of the at least one second imaging device (22),
wherein the data processing unit (50) further comprises:
a feature detection unit (52) for detecting at least one feature (110) in images of the at least one first imaging device (20) or the at least one second imaging device (22) or in a map created by these images;
a feature location determination unit (54) for locating said detected feature (110) in the map of data; and
a feature determination unit (56) for determining attributes of said detected feature relevant for agricultural operation of said detected feature (110),
wherein the at least one second imaging device (22) is adapted to be located based on a request for determining said detected feature, at a selected altitude at which the detected feature is expected to be optimally investigable.

2. System according to claim 1, wherein the data processing unit (50) is adapted to combine the received optical data and the received position data to obtain a combined map of data and further to include the determined features to the map of data to obtain an enhanced combined map of data comprising location and attributes of the determined features.

3. System according to one of the preceding claims, wherein the data processing unit (50) comprises at least one machine learning unit (59) and an input means (62) for allowing the user to input confirmation data for at least confirming and rejecting the interpretation of the interpretation data, wherein the at least one machine learning unit (59) of the data processing unit (50) calculates the interpretation of the optical data based on confirmation data input by the user via the input means.

4. System according to one of the preceding claims, wherein the data processing unit (50) is adapted to be provided on the agricultural working means (10) and the system further comprising a further data processing unit for providing processed data, wherein the further processing unit is adapted to be provided at a location remote from the agricultural working means (10).

5. System according to one of the preceding claims, wherein the at least one first imaging device (20) is adapted to be located at a bottom height, wherein the bottom height is the altitude of the at least one first imaging device to the surface of the agricultural field (100) and allows detecting bottom altitude detectable features and/or wherein the at least one second imaging device is adapted to be located at a selected one of three different altitudes (h), namely a low altitude, which is higher than the bottom altitude and allows detecting low altitude detectable features, a medium altitude which higher than the low altitude and allows detecting medium altitude detectable features and a high altitude which higher than the medium altitude and allows detecting high altitude detectable features.

6. System according to one of the preceding claims, wherein the agricultural working means (10) comprises a driving means (14) for driving the agricultural working means (10), and/or an agricultural working implement (16) attached to the driving means (14).

7. System according to claim 6, further comprising a display device (60), for displaying the acquired images and/or the enhanced combined map of data to a user, wherein the display device (60)
a. is arranged on the driving means (14), wherein the user is able to see the display device (60) while driving the driving means (14); and/or
b. is arranged at a location remote from the driving means (14).

8. System according to one of the claims 6 or 7, wherein the system (1) further comprises an operation input controller (80) for controlling the agricultural working operation, wherein the operation input controller (80)
a. is arranged on the driving means (14), wherein the user is able to perform inputs while driving the driving means (14); and/or
b. is arranged at a location remote from the driving means (14).

9. System according to one of the preceding claims, wherein at least one of the following components is comprised in a smartphone:
a. the at least one first imaging device (20),
b. the at least one second imaging device (22);
c. the position unit (30);
d. the data interpretation unit (51);
e. the mapping unit (70);
f. the data processing unit (50);
g. the further data processing unit;
h. the display device (60);
i. the operation input controller (80).

10. System according to one of preceding claims, wherein the data processing unit (50) is further adapted to provide a suggested controlling response based on the determined features of the enhanced combined map of data, wherein the suggested controlling response
a. is provided to a user via the display device (60), and/or
b. automatically induces a controlling response at the agricultural working means (10), which is accordingly controlled based on the controlling response.

11. System according to one of preceding claims 8 to 10, wherein the at least one second imaging device (22) is arranged on an autonomous aerial vehicle (40),
wherein the operation input controller (80) includes an autonomous aerial vehicle control, which is adapted to exchange data with the data processing unit (50),
wherein the data processing unit (50) is further adapted, after detecting a feature, to submit a suggested altitude value to the autonomous aerial vehicle control based on the detected feature,
wherein the autonomous aerial vehicle control is adapted to move the autonomous aerial vehicle (40) to the suggested altitude value automatically or by user input;
wherein the data processing unit (50) is adapted, after the autonomous aerial vehicle (40) has been moved to the suggested altitude value, to perform a feature detection, localization and/or determination automatically or by user input.

12. System according to one of the claims 3 to 11, wherein the at least one machine learning unit (59) comprises a neural network.

13. System according to one of the claims 1 to 12, further comprising a draft force sensor (18).

14. System according to claim 13, wherein draft force sensor data obtained from the draft force sensor (18) is correlated with the optical data.

15. Method of controlling agricultural operations by using a system (1) according to one of the preceding claims.

## Patentansprüche

1. System (1) zum Steuern landwirtschaftlicher Operationen, umfassend:
mindestens ein landwirtschaftliches Arbeitsmittel (10) zum Arbeiten auf einem landwirtschaftlichen Feld (100);
mindestens eine erste Bildgebungsvorrichtung (20), die sich an dem landwirtschaftlichen Arbeitsmittel (10) befindet, zum Erfassen von Bildern einer Umgebung des landwirtschaftlichen Arbeitsmittels (10), wobei die mindestens eine erste Bildgebungsvorrichtung (20) dazu ausgelegt ist, optische Daten bereitzustellen;
eine Positionseinheit (30) zum Bestimmen der absoluten Position der mindestens einen ersten Bildgebungsvorrichtung (20), wobei die Positionseinheit (30) dazu ausgelegt ist, Positionsdaten bereitzustellen;
eine Datenverarbeitungseinheit (50), umfassend eine Dateninterpretationseinheit (51) zum Interpretieren von optischen Daten, die von der mindestens einen ersten Bildgebungsvorrichtung (20) empfangen werden, in Bezug auf Positionsdaten, die von der Positionseinheit (30) empfangen werden, wobei die Dateninterpretationseinheit (51) dazu ausgelegt ist, Interpretationsdaten basierend auf den empfangenen Daten zu berechnen;
eine Kartierungseinheit (70) zum Bereitstellen einer Karte von Daten basierend auf den Interpretationsdaten, und
mindestens eine zweite Bildgebungsvorrichtung (22), die sich nicht an dem landwirtschaftlichen Arbeitsmittel (10) zusätzlich zu der mindestens einen ersten Bildgebungsvorrichtung (20) befindet, wobei die mindestens eine zweite Bildgebungsvorrichtung (22), die sich nicht an dem landwirtschaftlichen Arbeitsmittel (10) befindet, dazu ausgelegt ist, optische Daten bereitzustellen, und dazu ausgelegt ist, sich über dem landwirtschaftlichen Feld (100) in einer Höhe (h) zum Erfassen von Bildern eines Bereichs unter der mindestens einen zweiten Bildgebungsvorrichtung (22), die sich nicht an dem landwirtschaftlichen Arbeitsmittel (10) befindet, zu befinden, und wobei die Positionseinheit (30) dazu ausgelegt ist, die absolute Position der mindestens einen zweiten Bildgebungsvorrichtung (22) zu bestimmen,
wobei die Datenverarbeitungseinheit (50) ferner umfasst:
eine Merkmalsdetektionseinheit (52) zum Detektieren mindestens eines Merkmals (110) in Bildern der mindestens einen ersten Bildgebungsvorrichtung (20) oder der mindestens einen zweiten Bildgebungsvorrichtung (22) oder in einer Karte, die durch diese Bilder erstellt wird;
eine Merkmalspositionsbestimmungseinheit (54) zum Lokalisieren des detektierten Merkmals (110) in der Karte von Daten; und
eine Merkmalsbestimmungseinheit (56) zum Bestimmen von Attributen des detektierten Merkmals, die für die landwirtschaftliche Operation des detektierten Merkmals (110) relevant sind,
wobei die mindestens eine zweite Bildgebungsvorrichtung (22) dazu ausgelegt ist, sich basierend auf einer Anforderung zum Bestimmen des detektierten Merkmals in einer ausgewählten Höhe zu befinden, in der erwartet wird, dass das detektierte Merkmal optimal unauffindbar ist.

2. System nach Anspruch 1, wobei die Datenverarbeitungseinheit (50) dazu ausgelegt ist, die empfangenen optischen Daten und die empfangenen Positionsdaten zu kombinieren, um eine kombinierte Karte von Daten zu erhalten, und ferner die bestimmten Merkmale in die Karte von Daten aufzunehmen, um eine verbesserte kombinierte Karte von Daten zu erhalten, die Position und Attribute der bestimmten Merkmale umfasst.

3. System nach einem der vorhergehenden Ansprüche, wobei die Datenverarbeitungseinheit (50) mindestens eine Maschinenlerneinheit (59) und ein Eingabemittel (62) umfasst, um es dem Benutzer zu ermöglichen, Bestätigungsdaten zum mindestens Bestätigen und Zurückweisen der Interpretation der Interpretationsdaten einzugeben, wobei die mindestens eine Maschinenlerneinheit (59) der Datenverarbeitungseinheit (50) die Interpretation der optischen Daten basierend auf Bestätigungsdaten berechnet, die von dem Benutzer über das Eingabemittel eingegeben werden.

4. System nach einem der vorhergehenden Ansprüche, wobei die Datenverarbeitungseinheit (50) dazu ausgelegt ist, an dem landwirtschaftlichen Arbeitsmittel (10) bereitgestellt zu werden, und das System ferner eine weitere Datenverarbeitungseinheit zum Bereitstellen von verarbeiteten Daten umfasst, wobei die weitere Verarbeitungseinheit dazu ausgelegt ist, an einer von dem landwirtschaftlichen Arbeitsmittel (10) entfernten Position bereitgestellt zu werden.

5. System nach einem der vorhergehenden Ansprüche, wobei die mindestens eine erste Bildgebungsvorrichtung (20) dazu ausgelegt ist, sich in einer unteren Höhe zu befinden, wobei die untere Höhe die Höhe der mindestens einen ersten Bildgebungsvorrichtung zu der Oberfläche des landwirtschaftlichen Felds (100) ist und das Detektieren von detektierbaren Merkmalen in der unteren Höhe ermöglicht und/oder wobei die mindestens eine zweite Bildgebungsvorrichtung dazu ausgelegt ist, sich in einer ausgewählten von drei verschiedenen Höhen (h) zu befinden, nämlich einer niedrigen Höhe, die höher als die untere Höhe ist und das Detektieren von detektierbaren Merkmalen in der niedrigen Höhe ermöglicht, einer mittleren Höhe, die höher als die niedrige Höhe ist und das Detektieren von detektierbaren Merkmalen in der mittleren Höhe ermöglicht, und einer hohen Höhe, die höher als die mittlere Höhe ist und das Detektieren von detektierbaren Merkmalen in der hohen Höhe ermöglicht.

6. System nach einem der vorhergehenden Ansprüche, wobei das landwirtschaftliche Arbeitsmittel (10) ein Antriebsmittel (14) zum Antreiben des landwirtschaftlichen Arbeitsmittels (10) und/oder ein landwirtschaftliches Arbeitsgerät (16), das an dem Antriebsmittel (14) angebracht ist, umfasst.

7. System nach Anspruch 6, ferner umfassend eine Anzeigevorrichtung (60) zum Anzeigen der erfassten Bilder und/oder der verbesserten kombinierten Karte von Daten für einen Benutzer, wobei die Anzeigevorrichtung (60)
a. an dem Antriebsmittel (14) angeordnet ist, wobei der Benutzer die Anzeigevorrichtung (60) sehen kann, während er das Antriebsmittel (14) antreibt; und/oder
b. an einer von dem Antriebsmittel (14) entfernten Position angeordnet ist.

8. System nach einem der Ansprüche 6 oder 7, wobei das System (1) ferner eine Operationseingabesteuerung (80) zum Steuern der landwirtschaftlichen Arbeitsoperation umfasst, wobei die Operationseingabesteuerung (80)
a. an dem Antriebsmittel (14) angeordnet ist, wobei der Benutzer Eingaben durchführen kann, während er das Antriebsmittel (14) antreibt; und/oder
b. an einer von dem Antriebsmittel (14) entfernten Position angeordnet ist.

9. System nach einem der vorhergehenden Ansprüche, wobei mindestens eine der folgenden Komponenten in einem Smartphone enthalten ist:
a. die mindestens eine erste Bildgebungsvorrichtung (20),
b. die mindestens eine zweite Bildgebungsvorrichtung (22);
c. die Positionseinheit (30);
d. die Dateninterpretationseinheit (51);
e. die Kartierungseinheit (70);
f. die Datenverarbeitungseinheit (50);
g. die weitere Datenverarbeitungseinheit;
h. die Anzeigevorrichtung (60);
i. die Operationseingabesteuerung (80).

10. System nach einem der vorhergehenden Ansprüche, wobei die Datenverarbeitungseinheit (50) ferner dazu ausgelegt ist, eine vorgeschlagene Steuerungsantwort basierend auf den bestimmten Merkmalen der verbesserten kombinierten Karte von Daten bereitzustellen, wobei die vorgeschlagene Steuerungsantwort
a. einem Benutzer über die Anzeigevorrichtung (60) bereitgestellt wird, und/oder
b. automatisch eine Steuerungsantwort an dem landwirtschaftlichen Arbeitsmittel (10) induziert, die entsprechend basierend auf der Steuerungsantwort gesteuert wird.

11. System nach einem der vorhergehenden Ansprüche 8 bis 10, wobei die mindestens eine zweite Bildgebungsvorrichtung (22) an einem autonomen Luftfahrzeug (40) angeordnet ist,
wobei die Operationseingabesteuerung (80) eine autonome Luftfahrzeugsteuerung umfasst, die dazu ausgelegt ist, Daten mit der Datenverarbeitungseinheit (50) auszutauschen,
wobei die Datenverarbeitungseinheit (50) ferner dazu ausgelegt ist, nach dem Detektieren eines Merkmals einen vorgeschlagenen Höhenwert an die autonome Luftfahrzeugsteuerung basierend auf dem detektierten Merkmal zu übermitteln,
wobei die autonome Luftfahrzeugsteuerung dazu ausgelegt ist, das autonome Luftfahrzeug (40) automatisch oder durch Benutzereingabe auf den vorgeschlagenen Höhenwert zu bewegen;
wobei die Datenverarbeitungseinheit (50) dazu ausgelegt ist, nachdem das autonome Luftfahrzeug (40) auf den vorgeschlagenen Höhenwert bewegt wurde, eine Merkmalsdetektion, Lokalisierung und/oder Bestimmung automatisch oder durch Benutzereingabe durchzuführen.

12. System nach einem der Ansprüche 3 bis 11, wobei die mindestens eine Maschinenlerneinheit (59) ein neuronales Netzwerk umfasst.

13. System nach einem der Ansprüche 1 bis 12, ferner umfassend einen Zugkraftsensor (18).

14. System nach Anspruch 13, wobei Zugkraftsensordaten, die von dem Zugkraftsensor (18) erhalten werden, mit den optischen Daten korreliert werden.

15. Verfahren zum Steuern landwirtschaftlicher Operationen unter Verwendung eines Systems (1) nach einem der vorhergehenden Ansprüche.

## Revendications

1. Un système (1) pour le contrôle d'opérations agricoles, comprenant :
au moins un moyen de travail agricole (10) pour travailler sur un champ agricole (100) ;
au moins un premier dispositif d'imagerie (20) situé sur le moyen de travail agricole (10) pour acquérir des images d'un environnement du moyen de travail agricole (10), l'au moins un premier dispositif d'imagerie (20) étant apte à produire des données optiques ;
une unité de position (30) pour déterminer la position absolue de l'au moins un premier dispositif d'imagerie (20), l'unité de position (30) étant apte à produire des données de position ;
une unité de traitement de données (50) comprenant une unité d'interprétation de données (51) pour interpréter les données optiques reçues de l'au moins un premier dispositif d'imagerie (20) en relation avec les données de position reçues depuis l'unité de position (30), l'unité d'interprétation de données (51) étant apte à calculer des données d'interprétation sur la base des données reçues ;
une unité cartographique (70) pour produire une carte de données sur la base des données d'interprétation, et
au moins un second dispositif d'imagerie (22) qui n'est pas situé sur le moyen de travail agricole (10), en plus de l'au moins un premier dispositif d'imagerie (20), l'au moins un second dispositif d'imagerie (22) qui n'est pas situé sur le moyen de travail agricole (10) étant apte à produire des données optiques et étant apte à être localisé au-dessus du champ agricole (100) à une altitude (h) pour l'acquisition d'images d'une zone au-dessous de l'au moins un second dispositif d'imagerie (22) qui n'est pas situé sur le moyen de travail agricole (10), et l'unité de position (30) étant apte à déterminer la position absolue de l'au moins un second dispositif d'imagerie (22),
dans lequel l'unité de traitement de données (50) comprend en outre :
une unité de détection de singularités (52) pour détecter au moins une singularité (110) dans les images de l'au moins un premier dispositif d'imagerie (20) ou de l'au moins un second dispositif d'imagerie (22) ou dans une carte créée par ces images ;
une unité de détermination d'emplacement de singularité (54) pour localiser ladite singularité détectée (110) dans la carte de données ; et
une unité de détermination de singularité (56) pour déterminer des attributs de ladite singularité détectée pertinents pour une opération agricole de ladite singularité détectée (110),
dans lequel l'au moins un second dispositif d'imagerie (22) est apte à être localisé sur la base d'une requête de détermination de ladite singularité détectée, à une altitude sélectionnée à laquelle on peut s'attendre à ce que la singularité détectée soit examinable de façon optimale.

2. Système selon la revendication 1, dans lequel l'unité de traitement de données (50) est apte à combiner les données optiques reçues et les données de position reçues pour obtenir une carte de données combinée, et pour en outre inclure sur la carte de données les singularités déterminées pour obtenir une carte de données combinée enrichie comprenant l'emplacement et les attributs des singularités déterminées.

3. Système selon l'une des revendications précédentes, dans lequel l'unité de traitement de données (50) comprend au moins une unité d'apprentissage machine (59) et un moyen d'entrée (62) pour permettre à l'utilisateur d'entrer des données de configuration au moins pour confirmer et rejeter l'interprétation des données d'interprétation, l'au moins une unité d'apprentissage machine (59) de l'unité de traitement des données (50) calculant l'interprétation des données optiques sur la base de l'entrée des données de confirmation par l'utilisateur via le moyen d'entrée.

4. Système selon l'une des revendications précédentes, dans lequel l'unité de traitement de données (50) est apte à être placée sur le moyen de travail agricole (10) et le système comprend en outre une autre unité de traitement de données pour produire des données traitées, l'autre unité de traitement étant apte à être placée à une localisation se trouvant à distance du moyen de travail agricole (10).

5. Système selon l'une des revendications précédentes, dans lequel l'au moins un premier dispositif d'imagerie (20) est apte à être placé à une hauteur d'en bas, dans lequel la hauteur d'en bas est l'altitude de l'au moins un premier dispositif d'imagerie par rapport à la surface du champ agricole (100) et permet la détection de singularité détectable à l'altitude basse, et/ou dans lequel l'au moins un second dispositif d'imagerie est apte à être placé à l'une sélectionnée de trois altitudes différentes (h), à savoir une altitude basse qui est supérieure à l'altitude d'en bas et permet la détection de singularités détectables à basse altitude, une altitude moyenne qui est supérieure à l'altitude basse et permet la détection de singularités détectables à moyenne altitude, et une haute altitude qui est supérieure à l'altitude moyenne et permet la détection de singularités détectables à haute altitude.

6. Système selon l'une des revendications précédentes, dans lequel le moyen de travail agricole (10) comprend un moyen d'entraînement (14) pour entraîner le moyen de travail agricole (10), et/ou un outil de travail agricole (16) attaché au moyen d'entraînement (14).

7. Système selon la revendication 6, comprenant en outre un dispositif d'affichage (60), pour afficher à un utilisateur les images acquises et/ou la carte de données combinée enrichie, dans lequel le dispositif d'affichage (60) :
a. est situé sur le moyen d'entraînement (14), l'utilisateur pouvant voir le dispositif d'affichage (60) tout en conduisant le moyen d'entraînement (14) ; et/ou
b. est situé à une localisation se trouvant à distance du moyen d'entraînement (14).

8. Système selon l'une des revendications 6 ou 7, dans lequel le système (1) comprend un contrôleur d'entrée d'opération (80) pour contrôler l'opération de travail agricole, dans lequel le contrôleur d'entrée d'opération (80) :
a. est situé sur le moyen d'entraînement (14), l'utilisateur étant capable d'effectuer des entrées tout en conduisant le moyen d'entraînement (14) ; et/ou
b. est situé à une localisation se trouvant à distance du moyen d'entraînement (14).

9. Système selon l'une des revendications précédentes, dans lequel au moins l'un des composants suivants fait partie d'un smartphone :
a. l'au moins un premier dispositif d'imagerie (20) ;
b. l'au moins un second dispositif d'imagerie (22) ;
c. l'unité de position (30) ;
d. l'unité d'interprétation de données (51) ;
e. l'unité cartographique (70) ;
f. l'unité de traitement de données (50) ;
g. l'autre unité de traitements de données ;
h. le dispositif d'affichage (60) ;
i. le contrôleur d'entrée d'opération (80).

10. Système selon l'une des revendications précédentes, dans lequel l'unité de traitement de données (50) est en outre apte à produire une réponse de contrôle suggérée basée sur les singularités déterminées de la carte de données combinée enrichie, dans lequel la réponse de contrôle suggérée :
a. est délivrée à un utilisateur via le dispositif d'affichage (60), et/ou
b. provoque automatiquement une réponse de contrôle sur le moyen de travail agricole (10), qui est en conséquence contrôlé sur la base de la réponse de contrôle.

11. Système selon l'une des revendications 8 à 10 précédentes, dans lequel l'au moins un second dispositif d'imagerie (22) est situé sur un véhicule aérien autonome (40),
dans lequel le contrôleur d'entrée d'opération (80) comprend un contrôle de véhicule aérien autonome, qui est apte à échanger des données avec l'unité de traitement de données (50),
dans lequel l'unité de traitement de données (50) est en outre apte, après détection d'une singularité, à soumettre au contrôle de véhicule aérien autonome une valeur d'altitude suggérée sur la base de la singularité détectée,
dans lequel le contrôle de véhicule aérien autonome est apte à déplacer le véhicule aérien autonome (40) à la valeur d'altitude suggérée, de façon automatique ou par une entrée utilisateur ;
dans lequel l'unité de traitement de données (50) est apte, après que le véhicule aérien autonome (40) a été déplacé à la valeur d'altitude suggérée, à effectuer une détection, une localisation, et/ou une détermination de singularités de façon automatique ou par une entrée utilisateur.

12. Système selon l'une des revendications 3 à 11, dans lequel l'au moins une unité d'apprentissage machine (59) comprend un réseau neuronal.

13. Système selon l'une des revendications 1 à 12, comprenant en outre un capteur de force de traction (18).

14. Système selon la revendication 13, dans lequel des données de capteur de force de traction obtenues depuis le capteur de force de traction (18) sont corrélées avec les données optiques.

15. Procédé de contrôle d'opérations agricoles par utilisation d'un système (1) selon l'une des revendications précédentes.
